Europäisches Patentamt

European Patent Office

Office européen des brevets

(19)

(11) Publication number: **0 181 694**
**A1**

# EUROPEAN PATENT APPLICATION

(21) Application number: **85307021.7**

(22) Date of filing: **01.10.85**

(51) Int. Cl.⁴: **A 47 L 9/24**
**F 16 L 27/08**

(30) Priority: **01.10.84 US 656357**

(43) Date of publication of application:
**21.05.86 Bulletin 86/21**

(84) Designated Contracting States:
**BE DE FR GB IT NL SE**

(71) Applicant: **Easy Reach International, Inc.**

**Honolulu Hawaii(US)**

(72) Inventor: **Schneider, Norman J.**
**1120 South King Street Honolulu**
**Hawaii 96814(US)**

(74) Representative: **Lee, Philip Graham et al,**
**MARKS & CLERK 57/60 Lincoln's Inn Fields**
**London WC2A 3LS(GB)**

(54) Vacuum cleaner extension tube system.

(57) A vacuum cleaner extension tube system having a plurality of substantially identical tubular extension members (11) connectable in end-to-end relation to form an elongated conduit (12). At least some of the tubular extension members (11) are curved to define 45° elbows, and the connections between adjacent tubular extension members are held in tight frictional engagement, but are radially adjustable so that the sinuous configuration of the elongated conduit can be varied by the user to accommodate the unit to narrow and torturous openings. The opposite ends of each of the tubular extension members (11) are formed for coupling engagement with different standardised coupling configurations so that tools from one manufacturer can be used on vacuum cleaner suction hoses from a different manufacturer.

M&C FOLIO: 799P50963    WANGDOC: 0257L

## "VACUUM CLEANER EXTENSION TUBE SYSTEM"

This invention relates to vacuum cleaner attachment systems, and more particularly to systems providing tubular extensions for removably attaching tools to vacuum cleaner hoses.

Extension tubes for connection between vacuum cleaner suction hoses and attachment tools are well known in the prior art. Such extensions may be straight or curved or a combination of straight and curved, and it is known to "gang" several straight extensions together for longer reach. These extensions are provided with means for coupling them to the vacuum cleaner suction hose and the attachment tool. These couplings are releasable so that the extension may be used, or may be dispensed with, by coupling the attachment tool directly to the end of the vacuum cleaner suction hose.

Each of these prior art couplings, however, are usable with only one kind of coupling connection. This makes it impossible to use different makes of attachments with any particular vacuum cleaner. A number of coupling designs have been used through the years, but the two most commonly used "standard" designs are a friction grip coupling in which the ends to be coupled together are tapered slightly so that when such ends are telescoped together they are held in the desired position by frictional inter-engagement, and the detent type of coupling wherein a resiliently depressible button is formed on one of the ends and is releasably engageable in a detent opening formed in the other of the ends to be coupled together.

The Applicant is aware of the existence of various United States specifications namely those of:

U.S.A. Patent 1,115,989

U.S.A. Patent 2,351,507

U.S.A. Patent 2,665,446

U.S.A. Patent 3,282,609

U.S.A. Patent 3,950,014, and

U.S.A. Patent 3,986,737

The extension tube system of the present invention makes it possible to use attachment tools of one make and coupling configuration with vacuum cleaner suction hoses of a different make and different coupling configuration. This is accomplished by forming tubular extension members with different types of standard coupling configurations at their opposite ends adapted for coupling engagement with the different types of standardized coupling configurations provided by different makes of vacuum cleaners and vacuum cleaner attachments.

The extension tube systems of the present invention also makes it possible to change the configuration of the extension system in such manner that the attachment tool can easily be inserted into narrow and otherwise inaccessible places. This is accomplished by providing a plurality of extension tubes, with each tube being in the form of a reversible elbow. The connections between adjacent reversible elbows permit relative rotary displacement so that a series of the elbows can be joined together to describe various sinuous configurations making it possible for an attachment tool carried on the end of the string of elbow tubes to reach into constricted places not reachable by conventional straight and/or curved extensions.

It is therefore an object of the present invention to provide an extension tube system having a plurality of elbow sections connectable into an elongated string having a desired sinuous configuration.

Another object of the present invention is to provide an extension tube system of the character described in which the opposite ends of the component tubes, and hence the opposite ends of the system, may be coupled to different types of coupling devices as provided in different makes of vacuum cleaner hoses and attachments.

A further object of the present invention is to provide an extension tube system of the character described in which the component extension tubes are of substantially identical configuration, frictionally engageable with each other to provide an elongated extension wand having a desired shape for positioning a cleaning tool on the end of the extension in narrow and constricted spaces.

A still further object of the present invention is to provide an extension tube system of the character described in which the connections between the component tubes are held securely in desired angular relation to each other, but are quickly and readily releasable for changing the configuration of the extension system or for removing same entirely.

Other objects and features of advantage will become apparent from the following description of a particular and at present prepared embodiment of the invention which is illustrated by way of example in the accompanying drawings. In these drawings:-

Figure 1 is an exploded perspective view of a reversible elbow constructed in accordance with the present invention and shown in position for releasable attachment to the end of a vacuum cleaner hose and to the attachment end of a tool or wand, portions of the hose and tool or wand being broken away to conserve space;

Figure 2 is a view taken similarly to that of Figure 1, but showing the reversible elbow of the present invention in reversed mode for connection to a vacuum cleaner hose and a tool or wand different from those shown in Figure 1;

Figure 3 is an exploded perspective view of a pair of reversible elbows constructed in accordance with the present invention and shown in position for releasable attachment to each other;

Figure 4 is an enlarged vertical cross-sectional view through the reversible elbow of Figure 1, with the elbow being shown in operative association with end portions of similar elbows indicated in phantom lines;

Figure 5 is an enlarged fragmentary view of an end of the reversible elbow of Figure 1 formed for releasable coupling engagement with a boss or detent button extending radially outwardly from a member received within the end of the reversible elbow;

Figure 6 is a perspective view of a plurality of reversible elbows connected together end to end to form an elongated extension tube having a desired sinuous configuration;

Figure 7 is a view similar to that of Figure 6, but illustrating the component elbows rotated with respect to the connecting elbows to provide an elongated tube of different sinuous configuration; and

Figure 8 is a view similar to those of Figures 6 and 7, but illustrating the parts in yet another desired configuration.

While only the preferred form of the invention is illustrated in the drawings, it will be apparent that various modifications could be made without departing from the ambit of the appended claims.

Referring now to the drawings, the vacuum cleaner extension tube system of the present invention includes a plurality of tubular extension members 11 releasably connected together in end to end relation to provide an elongated conduit 12, connector means 13 and 14 at the opposite ends of the members 11 and hence the opposite ends of the conduit 12 adapted for quick release connection to a cleaning tool 16 and to a vacuum cleaner hose 17, the connections between the tubular extension members 11 being formed for rotational adjustment therebetween whereby the length of the conduit 12 is adjustable into desired configurations.

In accordance with the present invention, connector means 13 provides a standardised connection at one end of the conduit 12 and connector means 14 employs a differently formed standardised connection at the other end of the conduit. This makes it possible to connect the conduit 12 (consisting of one or more members 11) to vacuum cleaner suction hoses, vacuum cleaning tools, and other extension devices having incompatible coupling means. There are only very few quick release couplings which are sufficiently prevalent to be characterised as "standardised couplings", and the present invention is adapted for use with each of them.

These couplings fall into two principal categories, namely, couplings in which confronting ends engage telescopically, one within the other, and in which the confronting surfaces are generally tapered so that, as the ends are pushed together, frictional engagement holds them rigidly in the desired position until they are forcibly pulled apart. The other principal type also telescopes the ends, but a protuberance of one kind or another is provided on the inner of the mating ends and extends outwardly into a relieved portion to act as a detent capable of holding the parts together until removed. Normally, some sort of resilient means urges the protuberance into the detent opening so that, when it is desired to disassemble the coupling, the ends may be pulled apart with the protuberance either being depressed by the user or being depressing automatically as a strong pulling apart action is exerted.

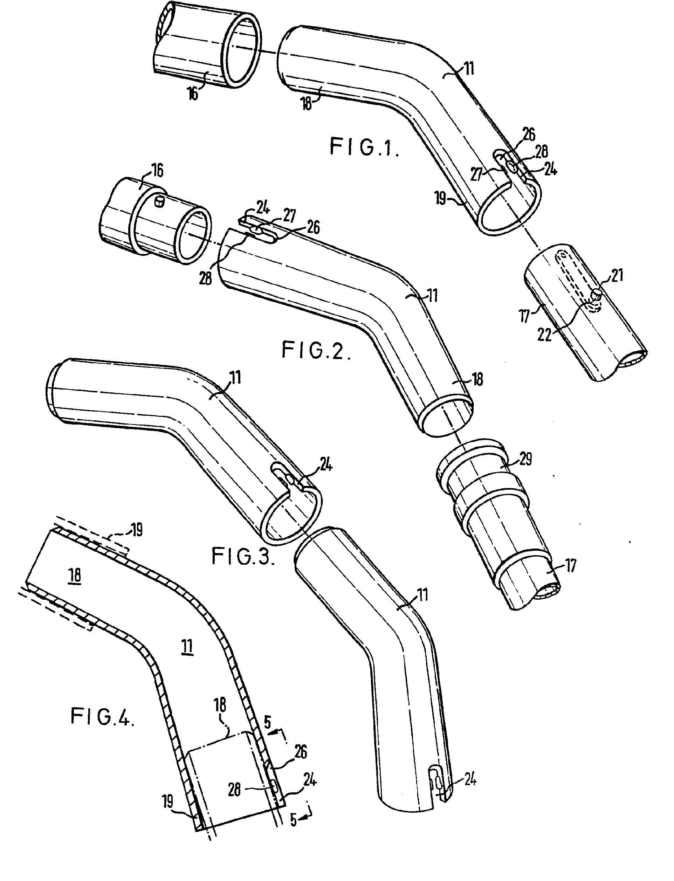

Two such dissimilar coupling means are illustrated in Figure 1 of the drawings. As there shown, one end 18 of a member 11 is slightly tapered and is formed to be received within the coupling end of a cleaning tool 16, the parts being held in the desired relation by frictional engagement of complementarily tapered surfaces. The opposite end, 19, of the member 11 is formed to receive the coupling end 17 of a hose or wand and the parts are held in the desired relationship by engagement of a detent button 21 urged outwardly through an opening 22 in the hose coupling end 17 by a spring member 23.

When the end 19 is slid onto the end 17, an axially extending slot 24 receives the detent button 21. Engagement of the detent button 21 with the end 26 limits the telescoping motion of the parts. The detent button is retained in this position by confronting flanges 27 and 28 formed to project inwardly into the slot by a distance which permits the detent button 21 to be slid into the slot to the end 26 with the confronting edges of the flanges 27 and 28 sufficiently close together to retain the detent button 21 frictionally in the end 26 of the slot 24. The material of which the tubular extension member is made is stiff, but possesses sufficient resiliency for the detent button 21 to urge the flanges 27 and 28 apart sufficiently to allow the detent button to pass when the coupling is being assembled or disassembled.

In Figure 2, the tubular extension member 11 has its position reversed from the position illustrated in Figure 1 so that the slot 24 can mate with the end of a cleaning tool 16. The end 18 is reduced in diameter and tapered for frictional engagement within a correspondingly tapered coupling member 29 attached to a vacuum cleaner suction hose 17.

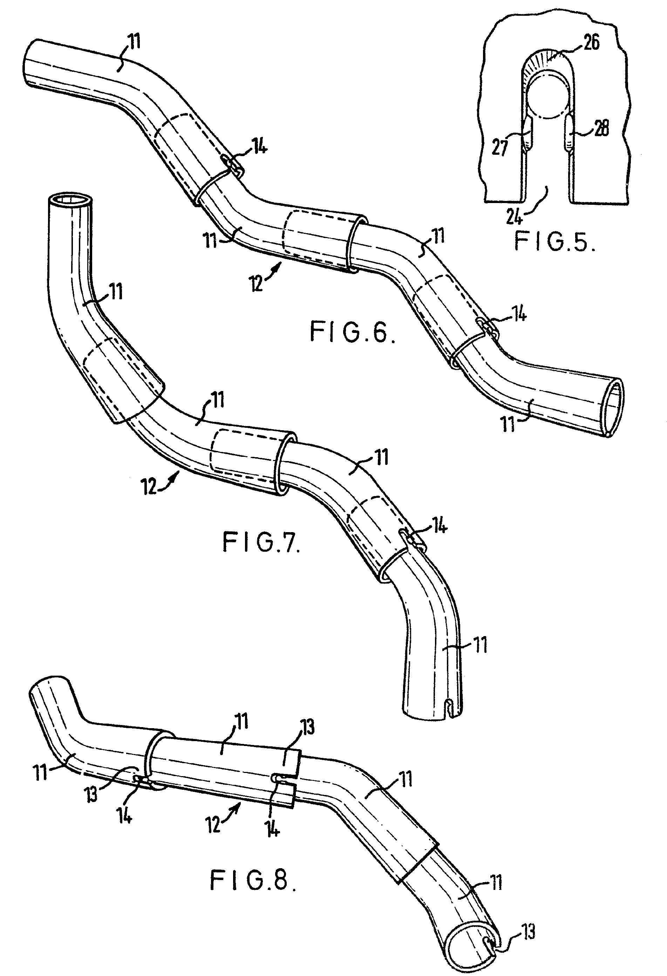

As an important feature of the present invention, a plurality of the tubular extension members 11 can be joined end to end to provide an elongated conduit 12 of whatever length is desired in increments of the length of the tubular extension members 11. The conduit 12 is particularly adapted for positioning a cleaning tool in hitherto inaccessible narrow and constricted areas. To accomplish this, at least some of the tubular extension members 11 are formed with the axis of one end angularly related to the axis of the other end. The tubular extension members 11 are formed to be releasably coupled together in such manner that the coupled ends may be rotated relative to each other. This makes it possible to make the conduit 12 in any sinuous shape necessary or desirable for inserting the cleaning tool into otherwise inaccessible constricted areas. Three different typical configurations of the conduit 12 are illustrated in Figures 6 to 8 of the drawings, although it will be apparent that a very large variety of configurations can be accomplished by connecting together and twisting the various tubular extension members 11.

As here shown, the connections between adjacent tubular extension members 11 are accomplished by forming the inner periphery of the end 19 with an inward taper capable of receiving the end 18 of the next adjacent tubular member 11 in a telescoping arrangement. As the end 18 is pushed into the end 19, the end 18 becomes frictionally engaged with the inner periphery of the end 19. The slight resilience of the plastic material from which the tubular extension members are moulded is such that the desired releasable and rotatably adjustable connection is achieved. Preferably, the plastic material from which the tubular extension members 11 are moulded is high-impact styrene.

The tubular extension members 11 may be of different sizes and shapes so long as they are capable of being joined together to provide the described different sinuous configurations. Preferably, the tubular extension members 11 are formed so that their opposite ends can be coupled to two different standardised types of couplings having wide-spread use so that vacuum cleaner hoses and cleaning tools from different manufacturers can be used.

In the form of the invention illustrated in the drawings, all of the tubular extension members 11 are substantially identical to each other. Each of the tubular extension members 11 is curved in its medial area to define an elbow having relatively straight portions at its opposite ends 18 and 19, with the axes of these ends being at an angle of approximately 45° to each other.

11

From the foregoing, it will be apparent that the vacuum cleaner extension tube system of the present invention provides a novel means for positioning vacuum cleaning tools in narrow, convoluted and heretofore inaccessible constricted areas, with the unit being formed for rapid and convenient assembly, disassembly and adjustment of its configuration. Moreover, individual tubular extension members 11 may be added or removed to lengthen or shorten the overall assembly, and each of the tubular extension members 11 is adapted for connection to two different "standardised" types of couplings.

CLAIMS

1. A vacuum cleaner extension tube system, comprising a plurality of tubular extension members (11 releasably connected together in end to end relation to provide an elongated conduit (12),

connector means (13, 14) at the opposite ends of said conduit (12) adapted for quick release connection to a cleaning tool (16) and to a vacuum cleaner hose (17),

at least some of said tubular extension members (11) being formed with angularly related ends, and

the connections being said tubular extension members (11) being formed for rotational adjustment therebetween whereby the length of said conduit (12) is adjustable into desired configurations.

2. A vacuum cleaner extension tube system as claimed in claim 1, and wherein said connector means (13, 14) provides a standardised connection at one end (18) and a differently formed standardised connection at the other end (19) of said conduit (12).

3. A vacuum cleaner extension tube system as claimed in claim 1, and wherein the connections between adjacent tubular extension members (11) are of telescoping form with an end of one of said members entering an end of the next adjacent of said members, the confronting surfaces of said ends being relatively tapered and sized for releasable frictional engagement therebetween.

4.   A vacuum cleaner extension tube as claimed in claim 1, wherein said angularly related ends are provided by making such tubular extension members in the form of curved elbows.

5.   A vacuum cleaner extension tube system as claimed in claim 4, wherein said elbows are axially curved over the medial portion of their length, and the opposite ends (18, 19) of said elbows are axially straight.

6.   A vacuum cleaner extension tube system as claimed in claim 4, wherein said elbows are formed with a first standardised connection element at one end and a second and different standardised connection element at the opposite end.

7.   A reversible extension tube for use with vacuum cleaner attachments wherein the vacuum cleaner suction hose end has a standardised connection and the attachment has a differently formed standardised connection , comprising

a tubular member adapted to be interposed between the vacuum cleaner suction hose end and the attachment,

and first and second coupling means at the opposite ends of said tubular member formed for releasable connection to said suction hose end and to said attachment respectively.

8. A reversible extension tube as claimed in claim 7, wherein said tubular member is axially curved over the medial portion of its length, and said opposite ends of said tubular member bearing said first and second coupling means are axially straight.

9. A reversible extension tube as claimed in claim 8, wherein the connection end of the attachment is tapered, said first coupling means being provided by forming a complementary taper at the corresponding end of said tubular member, the connection end of the suction hose being formed with a protuberance, and said second coupling means being provided by forming a protuberance receiving opening through the wall of the corresponding end of said tubular member in position for releasably receiving said protuberance when said last named end of said tubular member and said connection end of the suction hose are joined.

0181694

15

10. A reversible extension tube as claimed in claim 8, wherein the connection end of the attachment is formed with a protuberance, said first coupling means being provided by forming a protuberance-receiving opening through the wall of one end of said tubular member in position for releasably receiving said protuberance when the end of said tubular member having said first coupling means and said connector end of the attachment are joined, the connection end of the suction hose being tapered, and said second coupling means being provided by forming a complemtary taper at the other end of said tubular member.

11. A reversible extension tube as claimed in claim 7, wherein at least one of said coupling means is provided by forming a protuberance-receiving opening through the wall of one end of the tubular member in position for releasably receiving a protuberance on the coupling device to which said coupling means is to be connected, said protuberance-receiving opening comprising a slot extending axially from the rim of said opening to a position a measured distance therefrom, said slot being slightly wider than the diameter of said protuberance, and a pair of flanges positioned at the medial portion of said slot and extending inwardly thereof so that the confronting edges of said flanges are spaced apart by a distance slightly less than the

16    0181694

diameter of said protuberance whereby said protuberance is releasably held at the end of said slot remote from said rim but is releasable therefrom because of resilience of the material surrounding said slot.

12. A vacuum cleaner extension system, comprising a plurality of tubular extension members releasably connected together in end-to-end relation to provide an elongated conduit,

each of said members being formed to provide a first standardised connection at one end and a different standardised connection at the other end.

0181694

1/2

FIG.1.

FIG.2.

FIG.3.

FIG.4.

2/2

0181694

FIG.5.

FIG.6.

FIG.7.

FIG.8.

European Patent
Office

**EUROPEAN SEARCH REPORT**

0181694

Application number

EP 85 30 7021

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| X | DE-C- 710 589 (AS FISKER & NIELSEN) <br> * Page 2, lines 113-122; page 3, lines 1-4,45-61; page 4, lignes 62-112; figures 1-9 * | 1 | A 47 L 9/24 <br> F 16 L 27/08 |
| Y | | 2,3 | |
| A | | 4-8,12 | |
| Y | FR-A-1 098 836 (P.-E. MOREAU) <br> * Whole document° * | 2,3 | |
| A | | 5,12 | |
| A | US-A-1 859 449 (P. McKENZIE) <br> * Page 1, figure 1 * | 1 | TECHNICAL FIELDS SEARCHED (Int Cl.4) |
| A | US-A-2 755 107 (D.M. DOW) | | A 47 L <br> F 16 L |

The present search report has been drawn up for all claims

| Place of search | Date of completion of the search | Examiner |
|---|---|---|
| THE HAGUE | 17-01-1986 | MUNZER E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82